# EUROPÄISCHE PATENTSCHRIFT

(11) **EP 2 612 747 B1**
(45) Veröffentlichungstag und Bekanntmachung des Hinweises auf die Patenterteilung: **17.08.2016**
(21) Anmeldenummer: 12196612.1
(22) Anmeldetag: 12.12.2012
(51) Int. Cl.: B29C 67/00

(54) **Vorrichtung zur schichtweisen Herstellung von dreidimensionalen Objekten**
Device for the layered production of three-dimensional objects
Dispositif de fabrication en couche d'objets tridimensionnels

(30) Priorität: 06.01.2012 DE 102012200161
(43) Veröffentlichungstag der Anmeldung: 10.07.2013
(73) Patentinhaber: Evonik Degussa GmbH, 45128 Essen (DE)
(72) Erfinder: Grebe, Maik, 44805 Bochum (DE); Diekmann, Wolfgang, 45731 Waltrop (DE); Kreutz, Juergen, 45772 Marl (DE)

(56) Entgegenhaltungen:
- EP-A1- 1 234 625
- DE-C1- 19 514 740
- US-A- 5 582 876

## Beschreibung

Die vorliegende Erfindung betrifft eine Vorrichtung zur schichtweisen Herstellung von dreidimensionalen Objekten, sowie ein Verfahren zur schichtweisen Herstellung von dreidimensionalen Objekten.

Die zügige Bereitstellung von Prototypen ist eine in der jüngsten Zeit häufig gestellte Aufgabe. Verfahren die dies ermöglichen werden Rapid Prototyping/ Rapid Manufacturing oder auch Additive Fabrication-Verfahren genannt. Besonders geeignet sind Verfahren, die auf der Basis von pulverförmigen Werkstoffen arbeiten, und bei denen schichtweise durch selektives Aufschmelzen und Verfestigen die gewünschten Strukturen hergestellt werden. Auf Stützkonstruktionen bei Überhängen und Hinterschnitten kann dabei verzichtet werden, da die die aufgeschmolzenen Bereiche umgebende Baufeldebene ausreichende Stützwirkung bietet. Ebenso entfällt die Nacharbeit, Stützen zu entfernen. Die Verfahren sind auch für die Herstellung von Kleinserien geeignet. Die Bauraumtemperatur wird so gewählt, dass es während des Bauprozesses zu keinem Verzug der schichtweise hergestellten Strukturen kommt.

Ein Verfahren, welches besonders gut für den Zweck des Rapid Prototypings geeignet ist, ist das selektive Laser-Sintern (SLS). Bei diesem Verfahren werden Kunststoffpulver in einer Kammer selektiv kurz mit einem Laserstrahl belichtet, wodurch die Pulver-Partikel, die von dem Laserstrahl getroffen werden, schmelzen. Die geschmolzenen Partikel laufen ineinander und erstarren schnell wieder zu einer festen Masse. Durch wiederholtes Belichten von immer neu aufgebrachten Schichten können mit diesem Verfahren dreidimensionale Körper einfach und schnell hergestellt werden.

Das Verfahren des Laser-Sinterns (Rapid Prototyping) zur Darstellung von Formkörpern aus pulverförmigen Polymeren wird ausführlich in den Patentschriften US 6,136,948, WO 96/06881 (beide DTM Corporation) und EP 1 234 625 beschrieben. Eine Vielzahl von Polymeren und Copolymeren wird für diese Anwendung beansprucht, wie z.B. Polyacetat, Polypropylen, Polyethylen, lonomere und Polyamid.

Andere gut geeignete Verfahren sind das SIV-Verfahren (Selektive Verbindungsinhibition) wie in WO 01/38061 beschrieben, oder ein Verfahren wie in EP 1015214 beschrieben. Beide Verfahren arbeiten mit einer flächigen Infrarotheizung zum Aufschmelzen des Pulvers. Die Selektivität des Aufschmelzens wird bei ersterem durch die Auftragung eines Inhibitors, beim zweiten Verfahren durch eine Maske erreicht. Ein weiteres Verfahren ist in DE 10311438 beschrieben. Bei diesem wird die zum Verschmelzen benötigte Energie durch einen Mikrowellengenerator eingebracht, wobei die Selektivität durch Auftragen eines Suszeptors erreicht wird. Ein weiteres Verfahren wird in WO 2005/105412 beschrieben, bei dem die zum Verschmelzen benötigte Energie durch elektromagnetische Strahlung eingebracht wird, wobei ebenfalls wieder die Selektivität durch Auftragen eines Absorbers erreicht wird.

Ein Problem bei dem oben beschriebenen Verfahren ist, dass die eingesetzten Pulver rieselfähig sein müssen, damit ein einwandfreier Schichtauftrag gelingen kann. Nur bei einem einwandfreien Schichtauftrag können dreidimensionale Objekte von hoher Qualität hergestellt werden. Bei nicht ausreichender Rieselfähigkeit werden Bereiche des Baufeldes nicht oder nur unzureichend mit Pulver beschichtet. Zudem können Riefen, Wellen oder Risse im Pulverbett auftreten. Dieses führt im Prozess zu Problemen, so dass am Ende des Prozesses die hergestellten dreidimensionalen Objekte Defekte aufweisen.

Die Rieselfähigkeit der eingesetzten Pulver lässt sich durch die Zugabe von Additiven verbessern, wie z.B. in EP 1443073 beschrieben. Nachteil dieser Vorgehensweise ist, dass die zugegebenen Additive dann auch Bestandteil in den hergestellten dreidimensionalen Objekten ist, was in manchen Anwendungsfällen für diese Objekte unerwünscht sein kann. Zudem erhöht die Zugabe von Additiven zur Steigerung der Rieselfähigkeit meist auch den Verzug der hergestellten dreidimensionalen Objekte. Sehr feine Pulver lassen sich zudem auch mit der Zugabe von Additiven nicht oder nur bedingt rieselfähig machen. Es wäre aber wünschenswert möglichst feine Pulver einzusetzen, um die Oberflächenqualität der Bauteile zu erhöhen und die Verzugsneigung zu minimieren.

Aufgabe der vorliegenden Erfindung ist daher die Verbesserung des Auftrags von schlecht rieselfähigen Pulvern bei der Herstellung von dreidimensionalen Objekten.

Die genannte Aufgabe wird durch Vorrichtungen gemäß der vorliegenden Erfindung gelöst. Ein erster Gegenstand der vorliegenden Erfindung ist eine Vorrichtung nach Anspruch 1 zur schichtweisen Herstellung von dreidimensionalen Objekten (Formkörpern) umfassend einen Bauraum (40) mit einer höheneinstellbaren Bauplattform (6), einer Vorrichtung (7) zum Aufbringen einer Schicht eines durch Einwirkung elektromagnetischer Strahlung verfestigbaren Materials auf die Bauplattform (6), einer Bestrahlungseinrichtung umfassend eine elektromagnetische Strahlung emittierende Strahlungsquelle (1), eine Steuerungseinheit (3) und eine im Strahlengang der elektromagnetischen Strahlung befindliche Linse (8), zum Bestrahlen von dem Objekt (5) entsprechenden Stellen der Schicht, wobei die Vorrichtung (7) zum Aufbringen einer Schicht als Schieber (Rakel) ausgeführt ist, dessen der Schicht eines durch Einwirkung elektromagnetischer Strahlung verfestigbaren Materials, nachfolgend Pulver genannt, (dem Baufeld) zugewandte Kante (26) als nicht durchgehende Gerade ausgeführt ist und senkrecht zu der Auftragsrichtung und parallel zur Baufeldebene bewegt werden kann. Der Schieber weist somit Aussparungen auf, die der Baufeldebene zugewandt sind. Die Aussparungen stellen Bereiche im Schieber dar, durch die das verfestigbare Material vollflächig auf die Bauplattform aufgebracht wird. Vorzugsweise sind die Aussparungen regelmäßig angeordnet.

Die "entsprechenden Stellen" des Objekts stellen je eine Schicht der geslicten Kontur des Objekts dar, welche durch eine Ansteuerung des Laserstrahls schrittweise in das Pulverbett gesintert oder eingeschmolzen werden.

Die Aussparungen sind dreieckig oder. Es sind mindestens zwei, bevorzugt mindestens fünf und besonders bevorzugt mindestens zehn Aussparungen umfasst. Durch rechteckige Aussparungen entstehen kammartige Schieber. Dreieck- oder trapezförmige Aussparungen führen dreieckige Sicken die mit ihren Spitzen in Richtung der Baufeldebene weisen.

Es hat sich überraschend gezeigt, dass mit einer Vorrichtung gemäß der vorliegenden Erfindung auch schlecht rieselfähige Pulver aufgebracht werden können, so dass der Zusatz von Additiven verringert werden kann bzw. ganz darauf verzichtet werden kann. Dabei ist insbesondere überraschend, dass die genannte Aufgabe dadurch gelöst werden kann, dass eine Vorrichtung (7) eingesetzt wird, die in Form eines Schiebers ausgeführt ist, dessen dem aufzutragenden Pulver zugewande Kante als nicht durchgehende Gerade ausgeführt ist und senkrecht zu der Auftragsrichtung und parallel zur Baufeldebene bewegt werden kann. Vorzugsweise wird die Vorrichtung beim Pulverauftrag zusätzlich senkrecht zur Auftragsrichtung und parallel zur Baufeldebene bewegt.

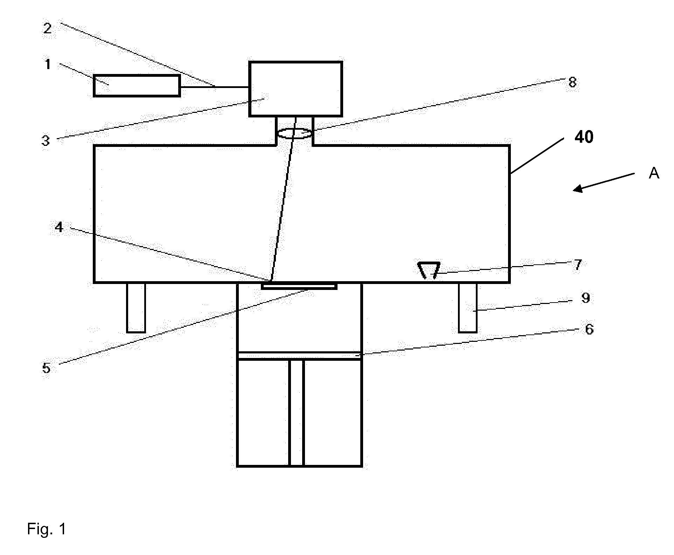

Fig. 1 zeigt den prinzipiellen Aufbau einer Vorrichtung zur Herstellung von dreidimensionalen Objekten gemäß der vorliegenden Erfindung. Das Bauteil wird zentral im Baufeld positioniert. Aus einem Laser (1) wird der Laserstrahl (2) mittels eines Scannsystems (3) durch die Linse (8) auf eine temperierte und inertisierte, vorzugsweise mit Stickstoff inertisierte, Pulveroberfläche (4) des zu bildenden Objekts (5) gelenkt. Die Linse hat dabei die Aufgabe, die restlichen optischen Komponenten wie z. B die Spiegel des Scanners von der Bauraumatmosphäre zu trennen. Oft wird die Linse als F-Theta Linsensystem ausgeführt, um einen möglichst homogenen Fokus über dem gesamten Arbeitsfeld zu gewährleisten. Innerhalb des Bauraums befindet sich die Aufbringvorrichtung (7) zum Aufbringen des zu verfestigenden Materials auf die Bauplattform (6), wobei die Aufbringvorrichtung in Form eines Schiebers ausgeführt ist, dessen dem Pulver zugewande Kante als nicht durchgehende Gerade ausgeführt ist und senkrecht zu der Auftragsrichtung und parallel zur Baufeldebene bewegt werden kann.

Es ist weiterhin bevorzugt, dass die Vorrichtung ein Heizelement zur Temperierung des Bauraums aufweist. Damit kann der Bauraum beispielsweise auf die für die Herstellung des dreidimensionalen Objektes ideale Temperatur eingestellt werden.

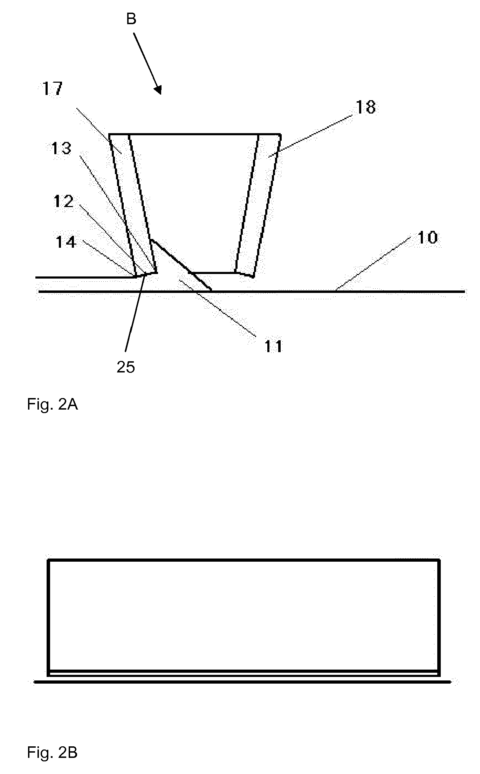

In Fig. 2A ist die Vorderansicht einer herkömmlichen Aufbringvorrichtung gemäß dem Stand der Technik dargestellt. Die Aufbringvorrichtung ist als Trichter ausgeführt, welcher durch zwei fest verbundene Wischer (17) und (18) gebildet wird. Die Pulverdosierung erfolgt von oben in den Trichter. Der der Baufeldebene zugewandte Teil der Aufbringvorrichtung ist als durchgehende Fläche (12) ohne Aussparungen ausgeführt, welche durch zwei gerade Kanten (13) und (14) begrenzt wird. Das Pulver (11) wird auf die vorherige Schicht bzw. auf die Baufeldebene (10) aufgetragen. Die Seitenansicht dieser Ausführung ist in Fig. 2B dargestellt.

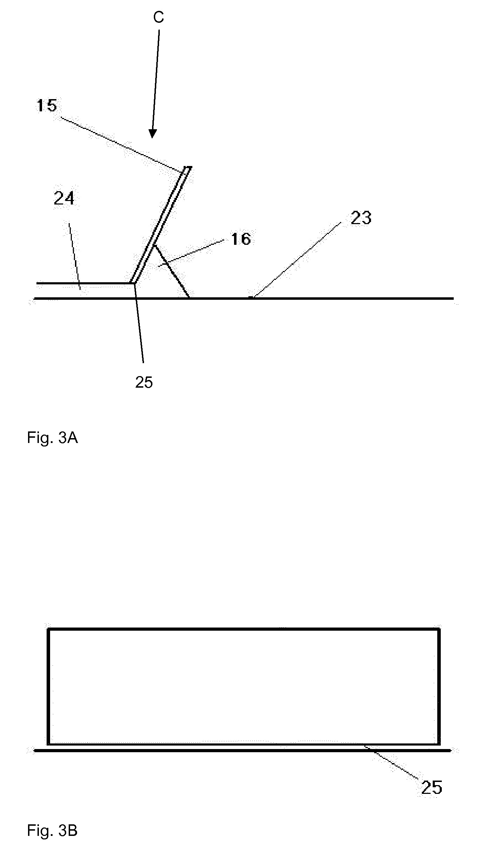

In Fig. 3A ist die Vorderansicht einer weiteren herkömmlichen Aufbringvorrichtung dargestellt. Die Aufbringvorrichtung ist als einfacher rechteckförmiger Wischer (15) ohne Aussparungen ausgeführt, der eine Schicht Pulver (24) aufträgt. Das aufzutragende Pulver (16) wird dabei über die vorherige Schicht bzw. die Baufeldebene (23) mittels des Wischers (15) gestrichen. Die der Baufeldebene zugewande Kante (25) ist auch hier als durchgehende Fläche ausgeführt. Die Seitenansicht ist in Fig.3B dargestellt. Die Pulverzuführung kann bei dieser Ausführung sowohl von unten als auch von oben erfolgen.

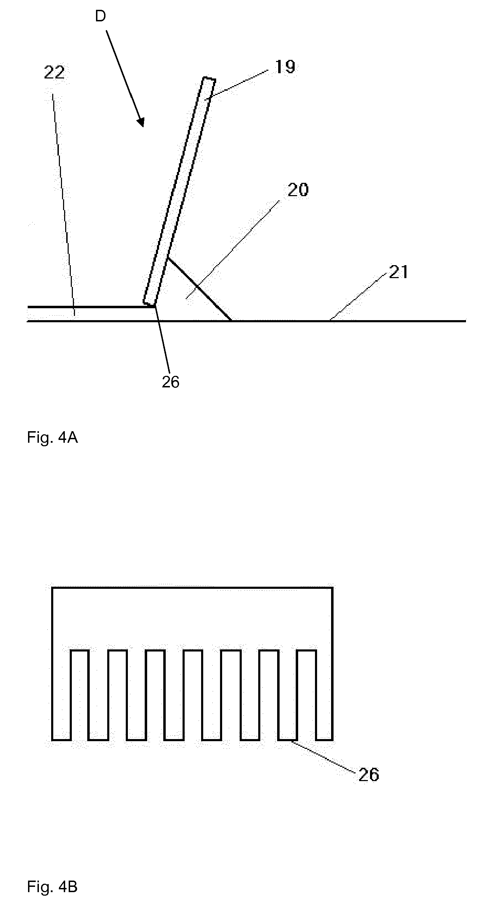

In Fig. 4A ist die Vorderansicht einer Aufbringvorrichtung dargestellt. Die Aufbringvorrichtung ist hier als einfacher Wischer (19) ausgeführt, der eine Schicht Pulver (22) aufträgt. Das aufzutragende Pulver (20) wird dabei mit dem Wischer (19) über die vorherige Schicht bzw. die Baufeldebene (21) gestrichen. Im Gegensatz zum Stand der Technik ist die der Baufeldebene zugewandte Kante des Wischers (26) nicht als durchgehende Gerade ausgeführt, wie in der in Fig. 4B dargestellten Seitenansicht zu erkennen ist. Der Anteil der ausgesparten Bereiche beträgt vorzugsweise höchstens 70% und wenigstens 30%, bezogen auf die Gesamtlänge der der Baufeldebene zugewandten Kante. Bevorzugt liegt der Anteil der ausgesparten Bereiche zwischen 40% und 60%. Besonders bevorzugt liegt der Anteil der ausgesparten Bereiche zwischen 45% und 55%. Die Vorrichtung ist derart gelagert, dass die Vorrichtung eine schwingende translatorische Bewegung ausführen kann, dessen Ortsänderungsvektor senkrecht zur Beschichtungsrichtung und parallel zur Baufeldebene ausgerichtet ist. Die Pulverzuführung kann bei dieser Ausführung sowohl von unten als auch von oben erfolgen.

Der Wischer kann beispielsweise aus metallischen oder Kunststoff-Material gefertigt sein. Vorzugsweise wird ein Material eingesetzt, das beim Auftrag des Pulvers nicht reversibel abgelenkt oder ausgelenkt wird und somit nicht elastisch ist.

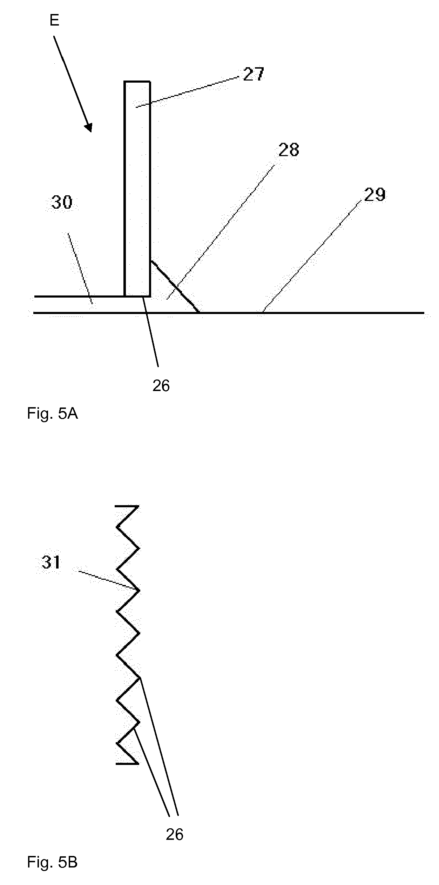

In Fig. 5A ist die Vorderansicht einer weiteren erfindungsgemäßen Ausführung der Vorrichtung dargestellt. Die Aufbringvorrichtung ist hier als einfacher Wischer (27) ausgeführt, der eine Schicht Pulver (30) aufträgt. Das aufzutragende Pulver (28) wird dabei mit dem Wischer (27) über die vorherige Schicht bzw. die Baufeldebene (29) gestrichen. Im Gegensatz zum Stand der Technik ist der Wischer nicht als rechteckförmige ebene Fläche ausgeführt, das heißt die Aufbringvorrichtung weist mindestens vorzugsweise mindestens zwei, insbesondere mindestens fünf Sicken (31) auf. Durch diese Ausführung ist die der Baufeldebene zugewandte Kante des Wischers ebenfalls nicht als Gerade ausgeführt. In der in Fig. 5B dargestellten Aufsicht ist diese Ausführungsform zu erkennen. Der Winkel in den Spitzen der Sicken (31) sollte kleiner als 150° sein. Bevorzugt ist dieser Winkel kleiner als 120°. Besonders bevorzugt ist dieser Winkel kleiner als 90°. Der Abstand der Sickenspitzen beträgt vorzugsweise mindestens 3 mm und maximal 50 mm. Die Vorrichtung ist derart gelagert, dass die Vorrichtung eine schwingende translatorische Bewegung ausführen kann, dessen Ortsänderungsvektor senkrecht zur Beschichtungsrichtung und parallel zur Baufeldebene ausgerichtet ist.

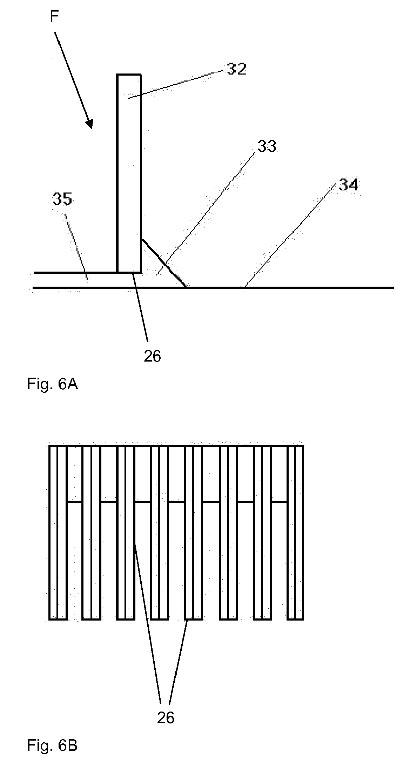

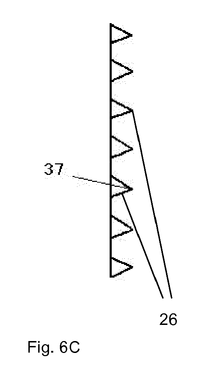

In Fig. 6A, Fig.6B und Fig.6C ist die Vorderansicht, Seitenansicht und die Aufsicht einer weiteren erfindungsgemäßen Ausführung der Vorrichtung dargestellt. Die Aufbringvorrichtung ist hier als Wischer (32) ausgeführt, der eine Schicht Pulver (35) aufträgt. Das aufzutragende Pulver (33) wird dabei mit dem Wischer (32) über die vorherige Schicht bzw. die Baufeldebene (34) gestrichen. In dieser Ausführung wird die in Fig.4A und Fig.4B dargestellte Ausführung mit der in Fig.5A und Fig. 5B dargestellten Ausführungsform kombiniert. Die Vorrichtung ist derart gelagert, dass die Vorrichtung eine schwingende translatorische Bewegung ausführen kann, dessen Ortsänderungsvektor senkrecht zur Beschichtungsrichtung und parallel zur Baufeldebene ausgerichtet ist.

Für einen verbesserten Pulverauftrag lassen sich mehrere der bisher genannten Ausführungsformen kombinieren. Die Aussparungen an den hintereinander geschalteten Wischern sind so zu gestalten, dass ein durchgängiges Pulverbett erstellt werden kann. Auf eine Schwingbewegung der Vorrichtung kann dann in diesem Falle verzichtet werden.

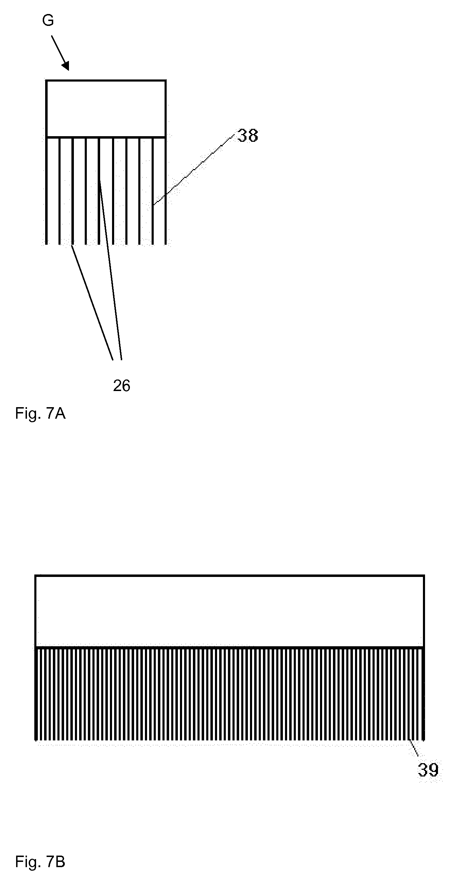

Eine weitere Ausführungsform ist in Fig. 7A (Vorderansicht) und 7B (Seitenansicht) dargestellt. Der Pulverauftrag erfolgt durch mehrere Reihen (38) von Drähten (39).

Die Qualität der aufgetragenen Schicht kann zusätzlich erhöht werden, indem nach dem Pulverauftrag mittels der erfindungsgemäßen Vorrichtung die Baufeldebene mittels einer Rolle oder eines Wischers glatt gestrichen wird. Die Rolle oder der Wischer können ausgewählt sein aus Metallen, Keramiken and Hochtemperaturkunststoffen. Geeignete Hochtemperaturkunststoffe sind beispielsweise Polyimide, Polyaryletherketone, Polyphenolensulfide, Polyarylsulfone oder Fluorpolymere.

In einer weiteren Ausführungsform kann die Vorrichtung zur schichtweisen Herstellung von dreidimensionalen Objekten zusätzlich einen Schwingungsgenerator beinhalten, der die Bauplattform (6) in Schwingung versetzt, um so die Dichte der Pulverschüttung zu erhöhen.

Für die Auftragbarkeit des Pulvers ist es von Vorteil, wenn das aufzutragende Pulver regelmäßig aufgelockert wird. Dies kann durch rotatorische oder translatorische Bewegung einer geeigneten Vorrichtung durch das aufzutragende Pulver erfolgen. Dies kann während des Pulverauftrags oder auch schon bei dem Dosiervorgang erfolgen. Durch diese Maßnahme wird der Klumpenbildung im aufzutragenden Pulver entgegengewirkt.

Gerade feine und schlecht bzw. nicht rieselfähige Pulver neigen dazu, an einer Vorrichtung des Standes der Technik zum Pulverauftrag anzuhaften. Diese Anhaftungen führen dann beim Pulverauftrag zu Riefen im Baufeld. Diese Anhaftungen können mittels einer Abstreifvorrichtung, beispielsweise mittels einer Bürste, beseitigt werden. Derartige Abstreifvorrichtungen sind dem Fachmann bekannt. Die Vorrichtung zum Pulverauftrag fährt über den Abstreifer und dabei werden die Anhaftungen beseitigt und fallen dann in einen Überlauf. Das Material des Abstreifers ist so zu wählen, dass eine ausreichende Kraft zur Beseitigung der Anhaftungen an der Vorrichtung zum Pulverauftrag gewährleistet ist, es aber gleichzeitig zu keiner Beschädigung der Vorrichtung zum Pulverauftrag kommt. Der Abstreifer kann beispielsweise aus Kunststoff oder Metall bestehen.

Ebenfalls Gegenstand der vorliegenden Erfindung ist ein Verfahren nach Anspruch 5 zur schichtweisen

Herstellung von dreidimensionalen Objekten, wobei das Pulver mittels einer erfindungsgemäßen Aufbringvorrichtung (7) während des Pulverauftrags auf dem Pulver zusätzlich zu der Kraft in Auftragsrichtung eine weitere Kraft wirkt, die senkrecht zur Beschichtungsrichtung und parallel zur Baufeldebene gerichtet ist. Insbesondere bevorzugt sind Verfahren zur schichtweisen Herstellung von dreidimensionalen Objekten, wobei das Verfahren in einer Vorrichtung umfassend einen Bauraum (10) mit einer höheneinstellbaren Bauplattform (6), einer Vorrichtung (7) zum Aufbringen einer Schicht eines durch Einwirkung elektromagnetischer Strahlung verfestigbaren Pulvers auf die Bauplattform (6), einer Bestrahlungseinrichtung umfassend eine elektromagnetische Strahlung emittierende Strahlungsquelle (1), eine Steuerungseinheit (3) und eine im Strahlengang der elektromagnetischen Strahlung befindliche Linse (8), zum Bestrahlen von dem Objekt (5) entsprechenden Stellen der Schicht durchgeführt wird und wobei während des Auftrags des verfestigbaren Pulvers auf dem Pulver zusätzlich zu der Kraft in Auftragsrichtung eine Kraft wirkt, die senkrecht zur Beschichtungsrichtung und parallel zur Baufeldebene gerichtet ist.

Das genannte Verfahren eignet sich insbesondere für den Auftrag von schlecht bzw. nicht rieselfähigen und oder sehr feinen Polymerpulvern.

Im Folgenden werden die erfindungsgemäßen Verfahren näher beschrieben, mit denen aus Pulvern Formteile hergestellt werden können, ohne dass die Erfindung darauf beschränkt werden soll.

Grundsätzlich eignen sich alle dem Fachmann bekannten Polymerpulver für den Einsatz in der erfindungsgemäßen Vorrichtung bzw. des erfindungsgemäßen Verfahrens. Geeignet sind insbesondere Thermoplaste und Thermoelaste wie beispielsweise Polyethylen (PE, HDPE, LDPE), Polypropylen (PP), Polyamide, Polyester, Polyesterester, Polyetherester, Polyphenylenether, Polyacetale, Polyalkylenterephthalate, insbesondere Polyethylenterephthalat (PET) und Polybutylenterephthalat (PBT), Polymethylmethacrylat (PMMA), Polyvinylacetal, Polyvinylchlorid (PVC), Polyphenylenoxid (PPO), Polyoxymethylen (POM), Polystyrol (PS), Acrylnitril-Butadien-Styrol (ABS), Polycarbonate (PC), Polyethersulfone, thermoplastische Polyurethane (TPU), Polyaryletherketone, insbesondere Polyetheretherketon (PEEK), Polyetherketonketon (PEKK), Polyetherketon (PEK), Polyetheretherketonketon (PEEKK), Polyaryletheretheretherketon (PEEEK) oder Polyetherketonetherketonketon (PEKEKK), Polyetherimide (PEI), Polyarylensulfide, insbesondere Polyphenylensulfid (PPS), thermoplastische Polyimide (PI), Polyamidimide (PAI), Polyvinylidenfluoride, sowie Copolymere dieser Thermoplaste wie z.B. ein Polyaryletherketon (PAEK) /Polyarylethersulfon (PAES)-Copolymer, Mischungen und/oder Polymerblends. Besonders bevorzugt umfasst das Polymerpulver mindestens ein Polyamid oder Polyaryletherketon. Ein ganz besonders bevorzugtes Polymerpulver enthält Polyamid oder besteht aus diesem, insbesondere PA6. PA66, PA610, PA613, PA1010, PA106, PA11, PA12, PA1012, PA1013 oder Mischungen aus diesen.

Darüber hinaus sind metallische Pulver, die beispielsweise Eisen, Titan oder Aluminium enthalten oder daraus bestehen, oder keramische Pulver geeignet. Vorzugsweise werden Polymerpulver eingesetzt.

Im Betrieb werden zunächst in der Regel in einem Rechner aufgrund eines Konstruktionsprogrammes oder dergleichen Daten über die Form des herzustellenden Objekts (5) erstellt bzw. abgespeichert. Diese Daten werden für die Herstellung des Objekts so aufbereitet, dass das Objekt in eine Vielzahl von horizontalen, im Vergleich zur Objektdimension dünnen Schichten zerlegt wird, und die Formdaten beispielsweise in Form von Datensätzen, z. B. CAD-Daten, für jede dieser Vielzahl von Schichten bereitgestellt werden. Die Erstellung und Aufbereitung der Daten für jede Schicht kann dabei vor der Herstellung oder auch gleichzeitig mit der Herstellung jeder Schicht erfolgen.

Anschließend wird zunächst die Bauplattform (6) mittels der Höheneinstellvorrichtung in die höchste Stellung gefahren, in der die Oberfläche der Bauplattform (6) in einer Ebene mit der Oberfläche des Bauraumes liegt, und anschließend um den Betrag der vorgesehenen Dicke der ersten Materialschicht abgesenkt, sodass innerhalb des entstehenden Ausschnitts ein abgesenkter Bereich gebildet ist, der seitlich von den Wänden des Ausschnitts und unten von der Oberfläche der Bauplattform (6) begrenzt ist. Mittels der Aufbringvorrichtung (7) wird sodann eine erste Schicht des zu verfestigenden Materials mit der vorgesehenen Schichtdicke in den vom Ausschnitt und der Bauplattform (6) gebildeten Hohlraum bzw. den abgesenkten Bereich eingebracht und gegebenenfalls von einer Heizung auf eine geeignete Arbeitstemperatur, beispielsweise 100 °C bis 360 °C, vorzugsweise 120 °C bis 200 °C, erwärmt. Daraufhin steuert die Steuereinheit (3) die Ablenkeinrichtung derart, dass der abgelenkte Lichtstrahl (2) nacheinander an allen Stellen der Schicht auftrifft und dort das Material sintert bzw. aufschmilzt. Auf diese Weise kann zunächst eine feste Bodenschicht gebildet werden. In einem zweiten Schritt wird die Bauplattform (6) mittels der Höheneinstellvorrichtung um den Betrag einer Schichtdicke abgesenkt und mittels der Aufbringvorrichtung (7) in den damit entstehenden abgesenkten Bereich innerhalb des Ausschnittes eine zweite Materialschicht eingebracht, ggf. wiederum von der Heizung erwärmt.

In einer Ausführungsform kann die Ablenkeinrichtung diesmal von der Steuereinheit (3) derart gesteuert werden, dass der abgelenkte Lichtstrahl (2) nur auf dem an die Innenfläche des Ausschnittes angrenzenden Bereich der Materialschicht auftrifft und dort die Materialschicht durch Sintern verfestigt, wodurch eine erste, beispielsweise ringförmige, Wandschicht mit einer Wandstärke von etwa 2 bis 10 mm entsteht, die das verbleibende pulverförmige Material der Schicht vollständig umgibt. Dieser Teil der Steuerung stellt damit eine Einrichtung zum Erzeugen einer das zu bildende Objekt (5) umgebenden Behälterwand gleichzeitig mit der Bildung des Objekts in jeder Schicht dar.

Nach Absenken der Bauplattform (6) um den Betrag der Schichtdicke der nächsten Schicht, Aufbringen des Materials und Aufheizen in der gleichen Weise wie oben kann nun die Herstellung des Objekts (5) selbst beginnen. Hierzu steuert die Steuereinheit (3) die Ablenkeinrichtung derart, dass der abgelenkte Lichtstrahl (2) an solchen Stellen der Schicht auftrifft, die entsprechend den in der Steuereinheit gespeicherten Koordinaten des herzustellenden Objekts (5) verfestigt werden sollen. Bei den weiteren Schichten wird analog vorgegangen. Im Falle der gewünschten Herstellung eines ringförmigen Wandbereichs in Form einer Behälterwand, die das Objekt zusammen mit dem verbleibenden, nicht gesinterten Material umschließt und so beim Absenken der Bauplattform (6) unter den Arbeitstisch ein Austreten des Materials verhindert, wird bei jeder Objektschicht mittels der Einrichtung eine ringförmige Wandschicht auf die darunterliegende ringförmige Wandschicht aufgesintert. Auf die Erstellung der Wand kann verzichtet werden, wenn ein Wechselbehälter entsprechend EP 1037739 oder ein fest eingebauter Behälter verwendet wird.

Nach Abkühlung kann das gebildete Objekt aus der Vorrichtung entnommen werden.

Ein weiterer Gegenstand der vorliegenden Erfindung ist die Verwendung nach Anspruch 7 von Polymerpulvern zur schichtweisen Herstellung von dreidimensionalen Objekten, mit einer mittleren Korngröße d50 von kleiner als 50 µm, das nach DIN EN ISO 6186 (Verfahren A, Durchflussdurchmesser 15 mm) nicht fließfähig ist. Bevorzugt ist ein Polymerpulver mit einem d50-Wert kleiner 35 µm, welches nach DIN EN ISO 6186 nicht fließfähig ist. Besonders bevorzugt ist dabei ein Polymerpulver mit einem d50-Wert kleiner 20µm, welches nach DIN EN ISO 6186 nicht fließfähig ist.

Der d50 Wert wird dabei mittels des Malvern Mastersizer 2000 gemessen (Trockenmessung, 20-40 g Pulver mittels Scirocco Trockendispergiergerät zudosiert. Die Zuführrate der Rüttelrinne beträgt 70%, und der Dispergierluftdruck liegt bei 3 bar. Die Messzeit der Probe beträgt 5 Sekunden (5000 Einzelmessungen), Brechungsindex und Blaulichtwert sind mit 1,52 festgelegt. Auswertung über Mie-Theorie).

Die Maßhaltigkeit der dreidimensionalen Objekte kann durch die Verwendung eines Polymerpulvers erhöht werden, welches mindestens eine BET-Oberfläche nach ISO 9277 von 6 m²/g aufweist. Besonders vorteilhaft ist die Verwendung eines Polymerpulvers mit einer BET-Oberfläche nach ISO 9277 von mindestens 8 m²/g. Ganz besonders vorteilhaft ist die Verwendung eines Polymerpulvers mit einer BET-Oberfläche nach ISO 9277 von mindestens 10 m²/g.

Die BET-Oberfläche wird im Rahmen der vorliegenden Erfindung nach ISO 9277 gemessen, unter Einsatz eines Micromeritics TriStar 3000 durch Gasadsorption von Stickstoff im diskontinuierlichen volumetrischen Verfahren: 7 Messpunkte bei Relativdrücken P/P0 zwischen ca. 0,05 und ca. 0,20, Kalibrierung des Totvolumens mittels He (99,996 %), Probenvorbereitung 1 h bei 23°C + 16 h bei 80°C unter Vakuum, spez. Oberfläche auf die entgaste Probe bezogen. Die Auswertung erfolgte mittels Mehrpunktbestimmung.

Geeignete Polymerpulver sind die oben aufgeführten Thermoplaste und Thermoelaste.

Die Prozesse zur Herstellung eines erfindungsgemäßen Polymerpulvers sind dem Fachmann bekannt. Beispielhaft kann hier die Sprühtrocknung, das Schmelzsprühen, die anionische Polymerisation oder die Kaltvermahlung genannt werden. Ein besonders geeignetes Verfahren zur Herstellung von Pulvern gemäß der vorliegenden Erfindung ist das Umfällen. Dabei wird das Polymer in einem geeigneten Lösungsmittel gelöst und dann auskristallisiert.

### Bezugszeichenliste:

- A: Vorrichtung zur Herstellung von dreidimensionalen Objekten (Fig. 1)
- 1: Strahlungsquelle, Laser
- 2: Laserstrahl
- 3: Scansystem
- 4: Pulveroberfläche
- 5: Objekt, das zu bilden ist
- 6: Bauplattform
- 7: Vorrichtung zum Aufbringen einer Schicht eines durch Einwirkung elektromagnetischer Strahlung verfestigbaren Materials
- 8: Linse
- 9: Überlaufbehälter
- 40: Bauraum

- B: Aufbringvorrichtung (Stand der Technik; Fig. 2A, 2B)
- 10: Baufeldebene
- 11: (aufzutragendes) Pulver
- 12: Durchgehende Fläche ohne Aussparungen
- 13: Erste gerade Kante
- 14: Zweite gerade Kante
- 17: Wischer
- 18: Wischer
- 19: Kante, der Baufeldebene zugewandt

- C: Aufbringvorrichtung (Stand der Technik; Fig. 3A, 3B)
- 15: Wischer
- 16: (aufzutragendes) Pulver
- 23: Baufeldebene
- 24: (aufzutragendes) Pulver
- 25: Kante, der Baufeldebene zugewandt

- D: Aufbringvorrichtung (Fig. 4A, 4B)
- 19: Wischer
- 20: (aufzutragendes) Pulver
- 21: Baufeldebene
- 22: Schicht Pulver
- 26: Kante des Wischers

- E: Erfindungsgemäße Aufbringvorrichtung (Fig. 5A, 5B)
- 26: Kante des Wischers
- 27: Wischer
- 28: (aufzutragendes) Pulver
- 29: Baufeldebene
- 30: Schicht Pulver
- 31: Sicken

- F: Erfindungsgemäße Aufbringvorrichtung (Fig. 6A - 6C)
- 26: Kante des Wischers
- 32: Wischer
- 33: (aufzutragendes Pulver)
- 34: Baufeldebene
- 35: Schicht Pulver
- 36: Sicken

- G: Erfindungsgemäße Auftragsvorrichtung (Fig. 7A, 7B)
- 26: Kante des Wischers
- 38: Reihen von Drähten
- 39: Drähte

Nachfolgend wird die vorliegende Erfindung anhand von Beispielen näher erläutert. Alternative Ausführungsformen der vorliegenden Erfindung sind in analoger Weise erhältlich.

### Beispiele:

Die Beispiele werden, wenn nicht anders angegeben, der folgenden Beschreibung entsprechend bearbeitet. Die Baukammer wird 180 min auf eine Temperatur vorgeheizt, die 20°C unterhalb der Prozesstemperatur liegt. Danach wird die Temperatur in der Baukammer auf die Prozesstemperatur erhöht. Die Verteilung der Temperatur im Bauraum ist nicht immer homogen, daher wird die mittels Pyrometer gemessene Temperatur als Bauraum-/Prozesstemperatur definiert. Vor der ersten Belichtung werden 40 Schichten mit einer Schichtdicke von je 150 µm Pulver aufgetragen. Aus einem Laser (1) wird der Laserstrahl (2) mittels eines Scannsystems (3) durch die Linse (8) auf die temperierte und inertisierte (N₂) Baufeldebene (4) gelenkt. Die Linse wird als F-Theta Linsensystem ausgeführt, um einen möglichst homogenen Fokus über der gesamten Baufeldebene zu gewährleisten.

Das zu belichtende Bauteil wird zentral im Baufeld positioniert. Eine quadratische Fläche mit einer Kantenlänge von 50 mm wird mittels des Lasers aufgeschmolzen. Danach wird die Bauplattform (6) um 0,15 mm abgesenkt und mittels einer üblichen Aufbringvorrichtung bzw. des erfindungsgemäßen Schiebers (7) eine neue Pulverschicht mit einer Geschwindigkeit von 100 mm/s aufgetragen. Anschließend werden die entsprechenden Stellen mittels Laser gesintert. Diese Schritte werden wiederholt bis ein 50 mm hohes dreidimensionales Bauteil (5) entsteht. Nach Abschluss der Belichtung werden noch 40 weitere Schichten aufgetragen, bevor die Heizelemente ausgeschaltet und die Abkühlphase eingeleitet wird. Die Zeit, die jeweils für eine Schicht benötigte wird, liegt während des gesamten Bauprozesses unter 40s.

Nach einer Abkühlzeit von mindestens 12 Stunden wird das Bauteil entnommen und vom anhaftenden Pulver befreit.

### Beispiel 1 (nicht erfindungsgemäß)

Der Bauprozess wird auf einer EOSINT P360 der Firma EOS GmbH durchgeführt. Verarbeitet wird ein PA12-Pulver mit den Pulverkennwerten aus Tabelle 1. Das Pulver wird mit der Beschichtungsvorrichtung der EOSINT P360, wie in Fig. 2 dargestellt, aufgetragen. Die Qualität der aufgetragenen Pulverschichten ist schlecht. Es sind Riefen im Baufeld zu erkennen. An manchen Stellen der Baufeldebene wird kein oder zu wenig Pulver aufgetragen. Die Prozesstemperatur beträgt 169 °C. Die Belichtungsparameter sind: Laserleistung 19,0 W, Scangeschwindigkeit 1100 mm/s, Abstand Belichtungslinien 0,3 mm. Das hergestellte dreidimensionale Objekt weist starke Oberflächendefekte auf.

### Beispiel 2 (nicht erfindungsgemäß)

Der Bauprozess wird auf einer EOSINT P380 der Firma EOS GmbH durchgeführt. Verarbeitet wird ein PA12-Pulver mit den Pulverkennwerten aus Tabelle 1. Das Pulver wird mit der Beschichtungsvorrichtung der EOSINT P380, wie in Fig. 2 dargestellt, aufgetragen. Die Qualität der aufgetragenen Pulverschichten ist schlecht. Es sind Riefen im Baufeld zu erkennen. An manchen Stellen der Baufeldebene wird kein oder zu wenig Pulver aufgetragen. Die Prozesstemperatur beträgt 170 °C. Die Belichtungsparameter sind: Laserleistung 36,0 W, Scangeschwindigkeit 2000 mm/s, Abstand Belichtungslinien 0,3 mm. Das hergestellte dreidimensionale Objekt weist starke Oberflächendefekte auf.

### Beispiel 3 (nicht erfindungsgemäß)

Der Bauprozess wird auf einer FORMIGA der Firma EOS GmbH durchgeführt. Verarbeitet wird ein PA12-Pulver mit den Pulverkennwerten aus Tabelle 1. Das Pulver wird mit einer herkömmlichen Beschichtungsvorrichtung der FORMIGA, wie in Fig. 3A/3B dargestellt, nach dem Stand der Technik aufgetragen. Die Qualität der aufgetragenen Pulverschichten ist schlecht. In großen Bereichen der Baufeldebene wird kein oder zu wenig Pulver aufgetragen. Die Herstellung eines dreidimensionalen Objektes ist nicht möglich. Die Prozesstemperatur beträgt 166 °C.

### Beispiel 4 (nicht erfindungsgemäß)

Der Bauprozess wird auf einer EOSINT P360 der Firma EOS GmbH durchgeführt. Verarbeitet wird ein PP-Pulver mit den Pulverkennwerten aus Tabelle 3. Das Pulver wird mit der Beschichtungsvorrichtung der EOSINT P360, wie in Fig. 2 dargestellt, aufgetragen. Die Qualität der aufgetragenen Pulverschichten ist schlecht. Es sind tiefe Riefen im Baufeld zu erkennen. An vielen Stellen der Baufeldebene wird kein oder zu wenig Pulver aufgetragen. Die Prozesstemperatur beträgt 123°C. Die Herstellung eines dreidimensionalen Objektes ist nicht möglich.

### Beispiel 5 (nicht erfindungsgemäß)

Der Bauprozess wird auf einer EOSINT P360 der Firma EOS GmbH durchgeführt. Verarbeitet wird ein PEEK-Pulver mit den Pulverkennwerten aus Tabelle 4. Das Pulver wird mit der Beschichtungsvorrichtung der EOSINT P360, wie in Fig. 2 dargestellt, aufgetragen. Die Prozesstemperatur beträgt 199 °C. Die Qualität der aufgetragenen Pulverschichten ist schlecht bzw. es lässt sich keine durchgehende Pulverschicht auftragen.

### Beispiel 6

Der Versuch wird im Bauraum einer EOSINT P360 der Firma EOS GmbH durchgeführt.

Verarbeitet wird ein PA12-Pulver mit den Pulverkennwerten aus Tabelle 1. Die Prozesstemperatur beträgt 169 °C. Das Pulver wird mit einer Vorrichtung aufgetragen, bei der 4 Wischer hintereinander in einem Abstand von 10 mm montiert sind. Die Geometrie der einzelnen Wischer ist in Fig. 4A/4B gezeigt. Die Aussparungen sind jeweils 10 mm breit. Der Anteil der ausgesparten Bereiche beträgt 50%. Die Vorrichtung führt eine schwingende translatorische Bewegung mit einer Amplitude von 4 mm und einer Frequenz von 10 Hz aus, dessen Ortsänderungsvektor senkrecht zur Beschichtungsrichtung und parallel zur Baufeldebene ausgerichtet ist, so dass eine gleichmäßige Verteilung des Pulvers gewährleistet ist. Das Pulver lässt sich problemlos auftragen. Die Baufeldebene wird vollständig beschichtet. Die Belichtungsparameter sind: Laserleistung 36,0 W, Scangeschwindigkeit 2000 mm/s, Abstand Belichtungslinien 0,3 mm. Das hergestellte dreidimensionale Objekt weist keine Oberflächendefekte auf.

### Beispiel 7 (erfindungsgemäß)

Der Versuch wird im Bauraum einer EOSINT P360 der Firma EOS GmbH durchgeführt.

Verarbeitet wird ein PA12-Pulver mit den Pulverkennwerten aus Tabelle 1. Die Prozesstemperatur beträgt 169 °C. Das Pulver wird mit einer Vorrichtung aufgetragen, deren Geometrie in Fig. 5A/5B dargestellt ist. Der Winkel der Spitzen der Sicken beträgt 90°. Die Vorrichtung führt eine schwingende translatorische Bewegung mit einer Amplitude von 1 mm und einer Frequenz von 100 Hz aus, dessen Ortsänderungsvektor senkrecht zur Beschichtungsrichtung und parallel zur Baufeldebene ausgerichtet ist. Das Pulver lässt sich problemlos auftragen. Die Baufeldebene wird vollständig beschichtet. Die Belichtungsparameter sind: Laserleistung 36,0 W, Scangeschwindigkeit 2000 mm/s, Abstand Belichtungslinien 0,3 mm. Das hergestellte dreidimensionale Objekt weist keine Oberflächendefekte auf.

### Beispiel 8 (erfindungsgemäß)

Der Versuch wird im Bauraum einer EOSINT P360 der Firma EOS GmbH durchgeführt.

Verarbeitet wird ein PA12-Pulver mit den Pulverkennwerten aus Tabelle 1. Die Prozesstemperatur beträgt 169 °C. Das Pulver wird mit einer Vorrichtung aufgetragen, bei der 2 Wischer hintereinander in einem Abstand von 25 mm montiert sind. Hinter den Wischern ist eine Stahl-Rolle (Durchmesser 25 mm) zum glätten der Baufeldebene montiert. Die Geometrie der Wischer ist in Fig. 6A/6B/6C dargestellt ist. Die Aussparungen sind jeweils 12 mm breit. Der Anteil der ausgesparten Bereiche beträgt 55%. Der Winkel der Spitzen der Sicken beträgt 80°.

Die Vorrichtung führt eine schwingende translatorische Bewegung mit einer Amplitude von 4 mm und einer Frequenz von 20 Hz aus, dessen Ortsänderungsvektor senkrecht zur Beschichtungsrichtung und parallel zur Baufeldebene ausgerichtet ist. Das Pulver lässt sich problemlos auftragen. Die Baufeldebene wird vollständig beschichtet. Die Belichtungsparameter sind: Laserleistung 36,0 W, Scangeschwindigkeit 2000 mm/s, Abstand Belichtungslinien 0,3 mm. Das hergestellte dreidimensionale Objekt weist keine Oberflächendefekte auf.

### Beispiel 9 (erfindungsgemäß)

Der Versuch wird im Bauraum einer EOSINT P360 der Firma EOS GmbH durchgeführt.

Verarbeitet wird ein PA12-Pulver mit den Pulverkennwerten aus Tabelle 1. Die Prozesstemperatur beträgt 169 °C. Das Pulver wird mit einer kammartigen Vorrichtung, wie in Fig. 7A/7B dargestellt, aufgetragen. Die Vorrichtung besteht aus 10 Reihen (Reihenabstand 3 mm) von Borsten aus Messing (Borstenlänge 20 mm, Durchmesser 1 mm, 60 Borsten auf 100 mm Länge). Die Vorrichtung führt eine schwingende translatorische Bewegung mit einer Amplitude von 2 mm und einer Frequenz von 100 Hz aus, dessen Ortsänderungsvektor senkrecht zur Beschichtungsrichtung und parallel zur Baufeldebene ausgerichtet ist. Das Pulver lässt sich problemlos auftragen. Die Baufeldebene wird vollständig beschichtet. Die Belichtungsparameter sind: Laserleistung 36,0 W, Scangeschwindigkeit 2000 mm/s, Abstand Belichtungslinien 0,3 mm. Das hergestellte dreidimensionale Objekt weist keine Oberflächendefekte auf.

### Beispiel 10 (erfindungsgemäß)

Der Versuch wird im Bauraum einer EOSINT P360 der Firma EOS GmbH durchgeführt. Verarbeitet wird ein PA6-Pulver mit den Pulverkennwerten aus Tabelle 2. Das Pulver wird mit einer kammartigen Vorrichtung, wie in Fig. 7A/7B dargestellt, aufgetragen. Die Vorrichtung besteht aus 8 Reihen (Reihenabstand 3mm) von Borsten aus Messing (Borstenlänge 20 mm, Durchmesser 1 mm, 60 Borsten auf 100 mm Länge). Die Vorrichtung führt eine schwingende translatorische Bewegung mit einer Amplitude von 1 mm und einer Frequenz von 200 Hz aus, dessen Ortsänderungsvektor senkrecht zur Beschichtungsrichtung und parallel zur Baufeldebene ausgerichtet ist. Das Pulver lässt sich problemlos auftragen. Die Baufeldebene wird vollständig beschichtet. Die Prozesstemperatur beträgt 199 °C. Die Belichtungsparameter sind: Laserleistung 36,0 W, Scangeschwindigkeit 2000 mm/s, Abstand Belichtungslinien 0,3 mm. Das hergestellte dreidimensionale Objekt weist keine Oberflächendefekte auf.

### Beispiel 11 (erfindungsgemäß)

Der Versuch wird im Bauraum einer EOSINT P360 der Firma EOS GmbH durchgeführt. Verarbeitet wird ein PP-Pulver mit den Pulverkennwerten aus Tabelle 3. Die Prozesstemperatur beträgt 123 °C. Das Pulver wird mit einer Vorrichtung aufgetragen, bei der 3 Wischer hintereinander in einem Abstand von 20 mm montiert sind. Die Geometrie der ersten beiden Wischer ist in Fig. 6A/6B/6C dargestellt ist. Der dritte Wischer ist entsprechend Fig. 5A/5B ausgeführt. Die Aussparungen der ersten beiden Wischer sind jeweils 12 mm breit. Der Anteil der ausgesparten Bereiche beträgt 55%. Der Winkel in den Spitzen der Sicken beträgt jeweils 80°. Die Vorrichtung führt eine schwingende translatorische Bewegung mit einer Amplitude von 2mm und einer Frequenz von 50 Hz aus, dessen Ortsänderungsvektor senkrecht zur Beschichtungsrichtung und parallel zur Baufeldebene ausgerichtet ist. Das Pulver lässt sich problemlos auftragen. Die Baufeldebene wird vollständig beschichtet. Die Belichtungsparameter sind: Laserleistung 36,0 W, Scangeschwindigkeit 2000 mm/s, Abstand Belichtungslinien 0,3 mm. Das hergestellte dreidimensionale Objekt weist keine Oberflächendefekte auf.

### Beispiel 12 (erfindungsgemäß)

Der Versuch wird im Bauraum einer EOSINT P360 der Firma EOS GmbH durchgeführt.

Verarbeitet wird ein PEEK-Pulver mit den Pulverkennwerten aus Tabelle 4. Die Prozesstemperatur beträgt 199 °C. Das Pulver wird mit einer Vorrichtung aufgetragen, bei der 3 Wischer hintereinander in einem Abstand von 20 mm montiert sind. Die Geometrie der ersten beiden Wischer ist in Fig. 6A/6B/6C dargestellt ist. Der dritte Wischer ist entsprechend Fig. 5A/5B ausgeführt. Die Aussparungen der ersten beiden Wischer sind jeweils 12 mm breit. Der Anteil der ausgesparten Bereiche beträgt 55%. Der Winkel in den Spitzen der Sicken beträgt jeweils 80°. Die Vorrichtung führt eine schwingende translatorische Bewegung mit einer Amplitude von 5 mm und einer Frequenz von 40 Hz aus, dessen Ortsänderungsvektor senkrecht zur Beschichtungsrichtung und parallel zur Baufeldebene ausgerichtet ist. Das Pulver lässt sich problemlos auftragen. Die Baufeldebene wird vollständig beschichtet.

**Tabelle 1 Pulverkennwerte von PA12-Pulver**

| | **Wert** | **Einheit** | **Prüfart/Prüfgerät/Prüfparameter** |
|---|---|---|---|
| Polymer | Polyamid 12 | | |
| Schüttdichte | 0,355 | g/cm³ | DIN EN ISO 60 |
| Korngröße d50 | 18 | µm | Malvern Mastersizer 2000, Trockenmessung, 20-40g Pulver mittels Scirocco Trockendispergiergerät zudosiert. Zuführrate Rüttelrinne 70%, Dispergierluftdruck 3 bar. Die Messzeit der Probe 5 Sekunden (5000 Einzelmessungen), Brechungsindex und Blaulichtwert mit 1,52 festgelegt. Auswertung über Mie-Theorie |
| Korngröße d10 | 11 | µm | Malvern Mastersizer 2000, Parameter siehe Korngröße d50 |
| Korngröße d90 | 38 | µm | Malvern Mastersizer 2000, Parameter siehe Korngröße d50 |
| <10,48µm | 9 | % | Malvern Mastersizer 2000, Parameter siehe Korngröße d50 |
| Rieselfähigkeit | Fließt nicht unter den Prüfbedingungen | s | DIN EN ISO 6186, Verfahren A, Durchmesser Düsenauslauf 15mm |
| Lösungsviskosität | 1,53 | - | ISO 307, Schott AVS Pro, Lösemittel m-Kresol sauer, Volumetrisches Verfahren, Doppelbestimmung, Lösetemperatur 100°C, Lösezeit 2h, Polymerkonzentration 5g/l Messtemperatur 25°C |
| BET (spez. Oberfläche) | 10,2 | m²/g | ISO 9277, Micromeritics TriStar 3000, Gasadsorption von Stickstoff, diskontinuierlichen volumetrischen Verfahren, 7 Messpunkte bei Relativdrücken P/P0 zwischen ca. 0,05 und ca. 0,20, Kalibrierung des Totvolumens mittels He(99,996 %), Probenvorbereitung 1 h bei 23°C + 16 h bei 80°C unter Vakuum, spez. Oberfläche auf die entgaste Probe bezogen, Auswertung erfolgte mittels Mehrpunktbestimmung |
| Schmelzpunkt 1. Aufheizung | 182 | °C | DIN 53765 DSC 7 v. Perkin Elmer Heiz-/Kühlrate 20K/min |
| Rekristallisationstemperatur | 139 | °C | DIN 53765 DSC 7 v. Perkin Elmer Heiz-/Kühlrate 20K/min |
| Materialkonditionierung | Material wird vor Verarbeitung/Analyse 24h bei 23°C und 50% Luftfeuchtigkeit gelagert | | |

**Tabelle 2 Pulverkennwerte von PA6-Pulver**

| | **Wert** | **Einheit** | **Prüfart/Prüfgerät/Prüfparameter** |
|---|---|---|---|
| Polymer | Polyamid 6 | | |
| Schüttdichte | 0,361 | g/cm³ | DIN EN ISO 60 |
| Korngröße d50 | 30 | µm | Malvern Mastersizer 2000, Trockenmessung, 20-40g Pulver mittels Scirocco Trockendispergiergerät zudosiert. Zuführrate Rüttelrinne 70%, Dispergierluftdruck 3 bar. Die Messzeit der Probe 5 Sekunden (5000 Einzelmessungen), Brechungsindex und Blaulichtwert mit 1,52 festgelegt. Auswertung über Mie-Theorie |
| Korngröße d10 | 12 | µm | Malvern Mastersizer 2000, Parameter siehe Korngröße d50 |
| Korngröße d90 | 52 | µm | Malvern Mastersizer 2000, Parameter siehe Korngröße d50 |
| <10,48µm | 7 | % | Malvern Mastersizer 2000, Parameter siehe Korngröße d50 |
| Rieselfähigkeit | Fließt nicht unter den Prüfbedingungen | s | DIN EN ISO 6186, Verfahren A, Durchmesser Düsenauslauf 15mm |
| Lösungsviskosität | 1,62 | - | ISO 307, Schott AVS Pro, Lösemittel Schwefelsäure, Volumetrisches Verfahren, Doppelbestimmung, Lösetemperatur 100°C, Lösezeit 2h, Polymerkonzentration 5g/l Messtemperatur 25°C |
| BET (spez. Oberfläche) | 6,5 | m²/g | ISO 9277, Micromeritics TriStar 3000, Gasadsorption von Stickstoff, diskontinuierlichen volumetrischen Verfahren, 7 Messpunkte bei Relativdrücken P/P0 zwischen ca. 0,05 und ca. 0,20, Kalibrierung des Totvolumens mittels He(99,996 %), Probenvorbereitung 1 h bei 23°C + 16 h bei 80°C unter Vakuum, spez. Oberfläche auf die entgaste Probe bezogen, Auswertung erfolgte mittels Mehrpunktbestimmung |
| Schmelzpunkt 1. Aufheizung | 217 | °C | DIN 53765 DSC 7 v. Perkin Elmer Heiz-/Kühlrate 20K/min |
| Rekristallisationstemperatur | 168 | °C | DIN 53765 DSC 7 v. Perkin Elmer Heiz-/Kühlrate 20K/min |
| Materialkonditionierung | Material wird vor Verarbeitung/Analyse 24h bei 23°C und 50% Luftfeuchtigkeit gelagert | | |

**Tabelle 3 Pulverkennwerte von Polypropylen-Pulver**

| | **Wert** | **Einheit** | **Prüfart/Prüfgerät/Prüfparameter** |
|---|---|---|---|
| Polymer | Polypropylen | | |
| Schüttdichte | 0,358 | g/cm³ | DIN EN ISO 60 |
| Korngröße d50 | 31 | µm | Malvern Mastersizer 2000, Trockenmessung, 20-40g Pulver mittels Scirocco Trockendispergiergerät zudosiert. Zuführrate Rüttelrinne 70%, Dispergierluftdruck 3 bar. Die Messzeit der Probe 5 Sekunden (5000 Einzelmessungen), Brechungsindex und Blaulichtwert mit 1,52 festgelegt. Auswertung über Mie-Theorie |
| Korngröße d10 | 19 | µm | Malvern Mastersizer 2000, Parameter siehe Korngröße d50 |
| Korngröße d90 | 43 | µm | Malvern Mastersizer 2000, Parameter siehe Korngröße d50 |
| <10,48µm | 1 | % | Malvern Mastersizer 2000, Parameter siehe Korngröße d50 |
| Rieselfähigkeit | Fließt nicht unter den Prüfbedingungen | s | DIN EN ISO 6186, Verfahren A, Durchmesser Düsenauslauf 15mm |
| BET (spez. Oberfläche) | 0,4 | m²/g | ISO 9277, Micromeritics TriStar 3000, Gasadsorption von Stickstoff, diskontinuierlichen volumetrischen Verfahren, 7 Messpunkte bei Relativdrücken P/P0 zwischen ca. 0,05 und ca. 0,20, Kalibrierung des Totvolumens mittels He(99,996 %), Probenvorbereitung 1 h bei 23°C + 16 h bei 80°C unter Vakuum, spez. Oberfläche auf die entgaste Probe bezogen, Auswertung erfolgte mittels Mehrpunktbestimmung |
| Schmelzpunkt 1. Aufheizung | 139 | °C | DIN 53765 DSC 7 v. Perkin Elmer Heiz-/Kühlrate 20K/min |
| Rekristallisationstemperatur | 97 | °C | DIN 53765 DSC 7 v. Perkin Elmer Heiz-/Kühlrate 20K/min |
| Materialkonditionierung | Material wird vor Verarbeitung/Analyse 24h bei 23°C und 50% Luftfeuchtigkeit gelagert | | |

**Tabelle 4 Pulverkennwerte von PEEK-Pulver**

| | **Wert** | **Einheit** | **Prüfart/Prüfgerät/Prüfparameter** |
|---|---|---|---|
| Polymer | PEEK | | |
| Schüttdichte | 0,261 | g/cm³ | DIN EN ISO 60 |
| Korngröße d50 | 19 | µm | Malvern Mastersizer 2000, Trockenmessung, 20-40g Pulver mittels Scirocco Trockendispergiergerät zudosiert. Zuführrate Rüttelrinne 70%, Dispergierluftdruck 3 bar. Die Messzeit der Probe 5 Sekunden (5000 Einzelmessungen), Brechungsindex und Blaulichtwert mit 1,52 festgelegt. Auswertung über Mie-Theorie |
| Korngröße d10 | 10 | µm | Malvern Mastersizer 2000, Parameter siehe Korngröße d50 |
| Korngröße d90 | 37 | µm | Malvern Mastersizer 2000, Parameter siehe Korngröße d50 |
| <10,48µm | 10 | % | Malvern Mastersizer 2000, Parameter siehe Korngröße d50 |
| Rieselfähigkeit | Fließt nicht unter den Prüfbedingungen | s | DIN EN ISO 6186, Verfahren A, Durchmesser Düsenauslauf 15mm |
| Lösungsviskosität | 1,61 | - | ISO 307, Schott AVS Pro, Lösemittel Schwefelsäure, Volumetrisches Verfahren, Doppelbestimmung, Lösetemperatur 100°C, Lösezeit 2h, Polymerkonzentration 5g/l Messtemperatur 25°C |
| BET (spez. Oberfläche) | 28 | m²/g | ISO 9277, Micromeritics TriStar 3000, Gasadsorption von Stickstoff, diskontinuierlichen volumetrischen Verfahren, 7 Messpunkte bei Relativdrücken P/P0 zwischen ca. 0,05 und ca. 0,20, Kalibrierung des Totvolumens mittels He(99,996 %), Probenvorbereitung 1 h bei 23°C + 16 h bei 80°C unter Vakuum, spez. Oberfläche auf die entgaste Probe bezogen, Auswertung erfolgte mittels Mehrpunktbestimmung |
| Schmelzpunkt 1. Aufheizung | 336 | °C | DIN 53765 DSC 7 v. Perkin Elmer Heiz-/Kühlrate 20K/min |
| Rekristallisationstemperatur | 283 | °C | DIN 53765 DSC 7 v. Perkin Elmer Heiz-/Kühlrate 20K/min |
| Materialkonditionierung | Material wird vor Verarbeitung/Analyse 24h bei 23°C und 50% Luftfeuchtigkeit gelagert | | |

## Patentansprüche

1. Vorrichtung zur schichtweisen Herstellung von dreidimensionalen Objekten umfassend einen Bauraum (40) mit einer höheneinstellbaren Bauplattform (6), einer Vorrichtung (7) zum Aufbringen einer Schicht eines durch Einwirkung elektromagnetischer Strahlung verfestigbaren Materials auf die Bauplattform (6), einer Bestrahlungseinrichtung umfassend eine elektromagnetische Strahlung emittierende Strahlungsquelle (1), eine Steuerungseinheit (3) und eine im Strahlengang der elektromagnetischen Strahlung befindliche Linse (8), zum Bestrahlen von dem Objekt (5) entsprechenden Stellen der Schicht, wobei Vorrichtung (7) zum Aufbringen einer Schicht als Rakel ausgeführt ist, dessen der Schicht eines durch Einwirkung elektromagnetischer Strahlung verfestigbaren Materials zugewandte Kante (26) Aussparungen aufweist und senkrecht zu der Auftragsrichtung und parallel zur Baufeldebene bewegt werden kann, **dadurch gekennzeichnet, dass** die Aufbringvorrichtung (7) mindestens zwei Sicken aufweist, wobei die Sicken als Spitzen ausgebildet sind und der Winkel in den Spitzen der Sicken höchstens 150° groß ist und wobei die Aussparungen dreieck- oder trapezförmig sind, welche zu dreieckigen Sicken führen, die mit ihren Spitzen in Richtung der Baufeldebene weisen.

2. Vorrichtung nach Anspruch 1, **dadurch gekennzeichnet, dass** der Anteil der Aussparungen an der dem Pulver zugewandten Kante mindestens 30% und höchstens 70% beträgt, bezogen auf die Gesamtlänge der der Baufeldebene zugewandten Kante.

3. Vorrichtung nach einem oder mehreren der Ansprüche 1 oder 2, **dadurch gekennzeichnet, dass** mehrere Aufbringvorrichtungen (7) miteinander kombiniert werden.

4. Vorrichtung nach einem oder mehreren der vorherigen Ansprüche **dadurch gekennzeichnet, dass** die Aufbringvorrichtung (7) einen Schwingungsgenerator beinhaltet.

5. Verfahren zur schichtweisen Herstellung von dreidimensionalen Objekten, **dadurch gekennzeichnet, dass** das Pulver mittels einer Aufbringvorrichtung (7) gemäß einem der Ansprüche 1 bis 4 aufgebracht wird und die Aufbringvorrichtung (7) derart gelagert ist, dass die Vorrichtung (7) eine schwingende translatorische Bewegung ausführt, wodurch während des Pulverauftrags auf dem Pulver zusätzlich zu der Kraft in Auftragsrichtung eine weitere Kraft wirkt, wobei Ortsänderungsvektor der Bewegung senkrecht zur Beschichtungsrichtung und parallel zur Baufeldebene gerichtet ist.

6. Verfahren nach Anspruch 5, **dadurch gekennzeichnet, dass** die Aufbringvorrichtung (7) zum Pulverauftrag mittels einer Abstreifvorrichtung von Anhaftungen gereinigt wird.

7. Verwendung von Polymerpulvern mit einer mittleren Korngröße d50 von kleiner als 50 µm, das nach DIN EN ISO 6186 (Verfahren A, Durchflussdurchmesser 15 mm) nicht fließfähig ist, zur schichtweisen Herstellung von dreidimensionalen Objekten nach einem Verfahren der Ansprüche 5 oder 6.

## Claims

1. Apparatus for the layer-by-layer production of three-dimensional objects, comprising a construction chamber (40) with an adjustable-height construction platform (6), with an apparatus (7) for applying, to the construction platform (6), a layer of a material solidifiable by exposure to electromagnetic radiation, and with irradiation equipment comprising a radiation source (1) which emits electromagnetic radiation, a control unit (3) and a lens (8) which is located in the beam path of the electromagnetic radiation, for irradiating points of the layer corresponding to the object (5), said apparatus (7) for applying a layer being configured as a doctor blade whose edge (26) facing the layer of a material solidifiable by exposure to electromagnetic radiation has recesses and can be moved perpendicular to the direction of application and parallel to the plane of the construction field, **characterized in that** the application apparatus (7) has at least two beads, where the beads are configured as peaks and the size of the angle within the peaks of the beads is not more than 150°, and where the recesses are triangular or trapezoidal, which lead to beads which are triangular and which point with their peaks in the direction of the plane of the construction field.

2. Apparatus according to Claim 1, **characterized in that** the fraction of the recesses on the powder-facing edge is at least 30% and not more than 70%, based on the overall length of the edge facing the plane of the construction field.

3. Apparatus according to one or both of Claims 1 and 2, **characterized in that** two or more application apparatuses (7) are combined with one another.

4. Apparatus according to one or more of the preceding claims, **characterized in that** the application apparatus (7) comprises a vibration generator.

5. Process for the layer-by-layer production of three-dimensional objects, **characterized in that** the powder is applied by means of an application apparatus (7) according to one of Claims 1 to 4, and the application apparatus (7) is mounted in such a way that the apparatus (7) performs a vibratory translational movement, as a result of which, during powder application, the powder is acted on not only by the force in the direction of application but also by a further force, where the displacement vector of the movement is directed perpendicular to the direction of coating and parallel to the plane of the construction field.

6. Process according to Claim 5, **characterized in that** the application apparatus (7) for powder application is cleaned by means of a cleaning apparatus to remove adhesions.

7. Use of polymer powders having an average grain size d50 of less than 50 µm and according to DIN EN ISO 6186 (method A, flow diameter 15 mm) being non-flowable for the layer-by-layer production of three-dimensional objects according to a process of Claim 5 or 6.

## Revendications

1. Dispositif pour la fabrication par couches d'objets tridimensionnels comprenant un espace de construction (40) pourvu d'une plate-forme de construction (6) réglable en hauteur, d'un dispositif (7) pour appliquer une couche d'un matériau pouvant être solidifié sous l'effet d'un rayonnement électromagnétique sur la plate-forme de construction (6), d'un dispositif d'irradiation, comprenant une source de rayonnement (1) émettant un rayonnement électromagnétique, une unité de commande (3) et une lentille (8) se trouvant dans le trajet des rayons du rayonnement électromagnétique, pour irradier des sites de la couche correspondant à l'objet (5), le dispositif (7) pour appliquer une couche étant réalisé sous forme de racle dont le bord (26) orienté vers la couche d'un matériau pouvant être solidifié sous l'effet d'un rayonnement électromagnétique présente des évidements et pouvant être déplacé perpendiculairement par rapport à la direction d'application et parallèlement par rapport au plan du champ de construction, **caractérisé en ce que** le dispositif d'application (7) présente au moins deux nervures, les nervures étant réalisées sous forme de pointes et l'angle dans les pointes des nervures étant d'au maximum 150° et les évidements présentant une forme triangulaire ou trapézoïdale, qui entraînent des nervures triangulaires qui pointent, avec leur pointe, vers le plan du champ de construction.

2. Dispositif selon la revendication 1, **caractérisé en ce que** la proportion d'évidements par rapport au bord orienté vers la poudre est d'au moins 30% et d'au plus 70%, par rapport à la longueur totale du bord orienté vers le plan du champ de construction.

3. Dispositif selon l'une ou plusieurs des revendications 1 ou 2, **caractérisé en ce que** plusieurs dispositifs d'application (7) sont combinés les uns avec les autres.

4. Dispositif selon l'une ou plusieurs des revendications précédentes, **caractérisé en ce que** le dispositif d'application (7) comporte un générateur d'oscillations.

5. Procédé pour la fabrication par couches d'objets tridimensionnels, **caractérisé en ce que** la poudre est appliquée au moyen d'un dispositif d'application (7) selon l'une quelconque des revendications 1 à 4 et le dispositif d'application (7) est logé de manière telle que le dispositif (7) effectue un mouvement oscillant de translation grâce auquel, pendant l'application de la poudre, une autre force, en plus de la force dans le sens d'application, agit sur la poudre, le vecteur de changement de position du mouvement étant dirigé perpendiculairement par rapport au sens du revêtement et parallèlement par rapport au plan du champ de construction.

6. Procédé selon la revendication 5, **caractérisé en ce que**, pour l'application de la poudre, des adhérences sont enlevées du dispositif d'application (7) au moyen d'un dispositif de raclage.

7. Utilisation de poudres polymères, présentant une granulométrie moyenne d50 inférieure à 50 µm qui, selon la norme DIN EN ISO 6186 (procédé A, diamètre d'écoulement 15 mm) ne s'écoule pas, pour la fabrication par couches d'objets tridimensionnels selon un procédé selon les revendications 5 ou 6.
